# EUROPÄISCHE PATENTANMELDUNG

(11) **EP 0 608 526 A1**
(43) Veröffentlichungstag der Anmeldung: **03.08.1994**
(21) Anmeldenummer: 93119927.7
(22) Anmeldetag: 10.12.1993
(51) Int. Cl.: C03B 5/237, F27D 1/04, F28D 17/02

(54) **Feuerfester Stein**

(30) Priorität: 23.01.1993 DE 4301823
(71) Anmelder: VEITSCH-RADEX AKTIENGESELLSCHAFT FÜR FEUERFESTE ERZEUGNISSE, A-1040 Wien (AT)
(72) Erfinder: Siegl, Walter, Dr., A-9500 Villach (AT)
(74) Vertreter: Becker, Thomas, Dr., Dipl.-Ing.

(57) **Zusammenfassung**

Feuerfester Stein zur Erstellung einer Regeneratorgitterung mit einem wandförmigen Basisteil (10) und zwei, sich von gegenüberliegenden Abschnitten des Basisteils (10) in entgegengesetzter Richtung erstreckenden Schenkeln (12a,b).

## Beschreibung

Die Erfindung betrifft einen feuerfesten Stein zur Erstellung einer Regeneratorgitterung, wie sie zum Beispiel für Winderhitzer von Hochöfen oder Kammern von Glasschmelzöfen bekannt sind. Eine Übersicht über bekannte Gitterungen und deren Steine geben die Radex-Rundschau 1988, 649 sowie Ceramic Engineering and Science Proceedings 5 (1984) Jan.-Febr.,No.1/2, Columbus, Ohio, USA, Seiten 34-48.

Darüber hinaus sind Steine der gattungsgemäßen Art beispielsweise aus der EP 0 206 262 A1, DE 29 34 208 C2, DE-PS 1,182,677 und AT-PS 372 364 bekannt.

Danach wird im wesentlichen zwischen sogenannten Topfsteinen beziehungsweise Topflochsteinen (DE 29 34 208 C2 beziehungsweise AT-PS 372 364) und einem konventionellen Besatz mit glatten Steinen (Radex-Rundschau (a.a.O., Figur 2)) unterschieden.

Darüber hinaus unterscheidet man sogenannte geschlossene Gitterungen, bei denen die Luft im wesentlichen durch umfangsseitig geschlossene Kanäle strömt, von sogenannten offenen Gitterungen, bei denen die Luftströmung ungerichtet ist.

Regeneratoren von Glaswannenöfen werden heute üblicherweise mit Topfsteinen oder Topflochsteinen zugestellt. Die dünnwandige Ausbildung dieser Steine führt zu einem hohen wärmetechnischen Wirkungsgrad. Dieser Gitterbesatz hat sich im wesentlichen bewährt. Gleichwohl besteht ein Bedürfnis, den wärmetechnischen Wirkungsgrad der genannten Gitterungen weiter zu optimieren. Auch bezüglich der Herstellung der Steine für die Gitterung sind Verbesserungen gewünscht, weil die großvolumigen Topfsteine oder Topflochsteine beim Tunnelofenbrand nur ein niedriges Besatzgewicht ermöglichen und damit relativ hohe Brennkosten pro Stein verursachen.

Ausgehend von dieser Aufgabe liegt der Erfindung die Erkenntnis zugrunde, daß durch eine völlig neuartige Geometrie eines Steins zur Erstellung einer Regeneratorgitterung sowohl offene wie geschlossene Gitterungen mit hervorragendem wärmetechnischen Wirkungsgrad erstellt werden können. Die neuartige Geometrie des Steins ist im wesentlichen dadurch gekennzeichnet, daß der Stein ein wandförmiges Basisteil und zwei, sich von gegenüberliegenden Abschnitten des Basisteils in entgegengesetzter Richtung erstreckende Schenkel aufweist, wobei diese Schenkel unter einem Winkel > 0 Grad und < 180 Grad zum Basisteil verlaufen.

Stellt man einen solchen Stein vertikal auf, wobei die Standfläche von der Unterkante des Basisteils und den beiden Schenkeln gemeinsam gebildet wird, so ergibt sich in der Aufsicht (beziehungsweise bei einem horizontalen Schnitt) im wesentlichen eine Z- oder N-Form, je nachdem, wie der Stein ausgerichtet ist.

Jeder einzelne Stein ist also "offen". Durch Kombination (Aneinanderlegen) von mehreren Steinen in einer horizontalen Ebene und Anordnung verschiedener horizontaler, so konfektionierter Steine in unterschiedlichen horizontalen Ebenen lassen sich - nach Bedarf - sowohl offene wie geschlossene Regeneratorgitterungen erstellen. Die verschiedenen Möglichkeiten zur Konfektionierung eines erfindungsgemäßen feuerfesten, keramischen Steins werden nachstehend sowie anhand verschiedener Ausführungsbeispiele näher beschrieben.

Die genannte neue Geometrie hat den Vorteil, daß beim Brand des Steins (zum Beispiel in einem Tunnelofen) ein sehr hohes Besatzgewicht erreicht werden kann, weil die einzelnen Steine eng nebeneinander (ohne wesentliche Totvolumina) gesetzt werden können.

Ein weiterer wesentlicher Vorteil besteht darin, daß sich die Steine so konfektionieren lassen, daß sie auch mit konventionellen Topfsteinen oder Topflochsteinen kombinierbar sind. Auch hierzu enthalten die nachfolgende Beschreibung sowie die Ausführungsbeispiele nähere Erläuterungen.

Der Winkel zwischen dem Basisteil und den Schenkeln soll nach einer Ausführungsform zwischen 30 und 90° betragen.

Beträgt der Winkel exakt 90°, ergibt sich in der Aufsicht eine Form, die als "Doppel-L" bezeichnet werden kann.

Liegt der Winkel unter 90° und verlaufen die beiden Schenkel im wesentlichen parallel zueinander, so folgt daraus, daß der Basisteil sich "schräg" zwischen den Schenkeln erstreckt, woraus sich eine typische "Z"-Form oder - bei Drehung des gesamten Steins um 90° - eine "N"-Form (in der Aufsicht) ergibt.

Dies gilt insbesondere bei einer Ausführungsform, bei der sich die Schenkel von gegenüberliegenden Seitenkanten des Basisteils erstrecken.

Die Wandstärke des Basisteils und der Schenkel kann gleich oder unterschiedlich sein. Die Wandstärke kann dabei im wesentlichen der Wandstärke bekannter Topfsteine oder Topflochsteine entsprechen.

Die Vielzahl der Kombinationsmöglichkeiten der Steine untereinander zum Aufbau einer Regeneratorgitterung wird vergrößert, wenn der Stein, bezogen auf eine in der Mitte zwischen den Schenkeln und senkrecht zum Basisteil verlaufende (gedachte) Ebene spiegelsymmetrisch aufgebaut ist, wie dies typischerweise bei einer idealen "Z"- oder "N"-Form der Fall ist.

Die (vertikal verlaufenden) freien Stirnkanten jedes Schenkels können auf unterschiedliche Art und Weise ausgebildet sein. Nach einer ersten Ausführungsform sollen die freien Stirnkanten parallel zum Basisteil verlaufen. Hierdurch ergibt sich die Möglichkeit, daß ein Schenkel eines Steins einer Ebene fluchtend auf den anderen Schenkel eines Steins einer darunter oder darüberliegenden Ebene zur Erstellung einer Gitterung gesetzt werden kann.

Dies gilt im wesentlichen auch, wenn die freien Stirnkanten jedes Schenkels abgerundet ausgebildet sind.

Nach einer weiteren Ausführungsform sind die freien Stirnkanten jedes Schenkels - in bezug auf die Mittenebene des Schenkels - spiegelbildlich gestaltet. Dabei kann sich zum Beispiel - in der Aufsicht - eine "V"-Form ergeben. Zur Bildung einer geschlossenen Regeneratorgitterung können dann innerhalb einer Ebene benachbarte Steine jeweils versetzt zueinander angeordnet werden, wobei jeweils eine der abgewinkelten Flächen der Stirnkante eines Steins an einer korrespondierenden abgewinkelten Fläche eines benachbarten Steins anliegt (innerhalb einer horizontalen Ebene). Diese Ausführungsform, bei der die Schenkel vorzugsweise parallel zueinander verlaufen, ermöglicht bei entsprechender Dimensionierung die Kombination mit konventionellen Topflochsteinen, wie sie beispielsweise aus der DE 29 34 208 C2 bekannt sind.

Um die Stabilität der in einer horizontalen Ebene zusammengestellten Steine gegenüber einer benachbarten Ebene zu erhöhen, wird ferner vorgeschlagen, die vom Basisteil und den Schenkeln gemeinsam gebildeten Standflächen jedes Steins mit Profilierungen auszubilden. So können auf einer Standfläche eine oder mehrere Ausnehmungen angeordnet werden, während auf der anderen Standfläche korrespondierende Vorsprünge ausgebildet werden. Es ergibt sich dann für den erfindungsgemäßen Stein eine ähnliche Verbindungstechnik, wie sie für Topflochsteine zum Beispiel aus der EP 0 206 262 A1 bekannt ist. Werden die Ausnehmungen dabei größer ausgebildet als die Vorsprünge, entstehen gleichzeitig Durchbrechungen, die zu einer horizontalen Verwirbelung der durch die Regeneratorgitterung geführten Gase führen und damit den Wärmeübergang auf das Steinmaterial optimieren.

Es liegt im Rahmen der Erfindung, die Geometrie der Steine - je nach Anwendungsfall - zusätzlich zu modifizieren. So können die Anschlußbereiche (Winkelbereiche) zwischen dem Basisteil und den Schenkeln abgewinkelt oder abgerundet ausgebildet werden. Darüber hinaus ist es nicht unbedingt notwendig, die Schenkel und/oder den Basisteil geradlinig auszubilden; vielmehr können auch abgerundete oder mehrfach abgewinkelte geometrische Formen gewählt werden.

Bezüglich der Materialauswahl und der Materialstärke unterliegt die Erfindung keinen Beschränkungen. So können die Steine aus allen möglichen basischen oder nicht basischen feuerfesten Rohstoffkomponenten hergestellt werden, insbesondere MgO, Chromit, Spinellen, Forsterit, Al₂O₃, Mullit, Schamotte, Silica, ZrO₂, Zirkonsilikat oder Mischungen daraus. Die Rohstoffe können als vorgebrannte oder vorgeschmolzene Materialien zum Einsatz kommen. Die Steinherstellung kann durch ein beliebiges keramisches Verfahren erfolgen, insbesondere durch Schmelzgießen, Gießen, Pressen, isostatisches Pressen oder dergleichen, gegebenenfalls mit nachfolgender Trocknung und keramischem Steinbrand. Ebenso ist es möglich, die Steine strangzupressen und im Anschluß an die Strangpresse zu schneiden.

Weitere Merkmale der Erfindung ergeben sich aus den Merkmalen der Unteransprüche sowie den sonstigen Anmeldungsunterlagen.

Einige beispielhafte geometrische Formen sowie deren Konfektionierung zu einer Regeneratorgitterung werden in den nachfolgenden Ausführungsbeispielen schematisch dargestellt. Insoweit erfolgt diese Darstellung nur beispielhaft und nicht beschränkend. Dabei zeigen:
- Figur 1:: eine Aufsicht auf eine erste Ausführungsform einer Regeneratorgitterung mit einem in der Aufsicht "Z"-förmigen Stein,
- Figur 2:: eine Aufsicht auf eine zweite Ausführungsform einer erfindungsgemäßen Regeneratorgitterung mit einem "Z"-förmigen Stein,
- Figur 3:: eine dritte Ausführungsform einer Regeneratorgitterung in der Aufsicht mit einem "Z"-förmigen Stein,
- Figur 4:: eine Aufsicht auf eine Regeneratorgitterung mit einem "Doppel-L"-förmigen Stein,
- Figur 5:: eine perspektivische Explosionsdarstellung einer Regeneratorgitterung mit einer weiteren Ausführungsform eines "Z"-förmigen Steins.

In den Figuren sind gleiche oder gleichwirkende Bauteile mit gleichen Bezugsziffern dargestellt.

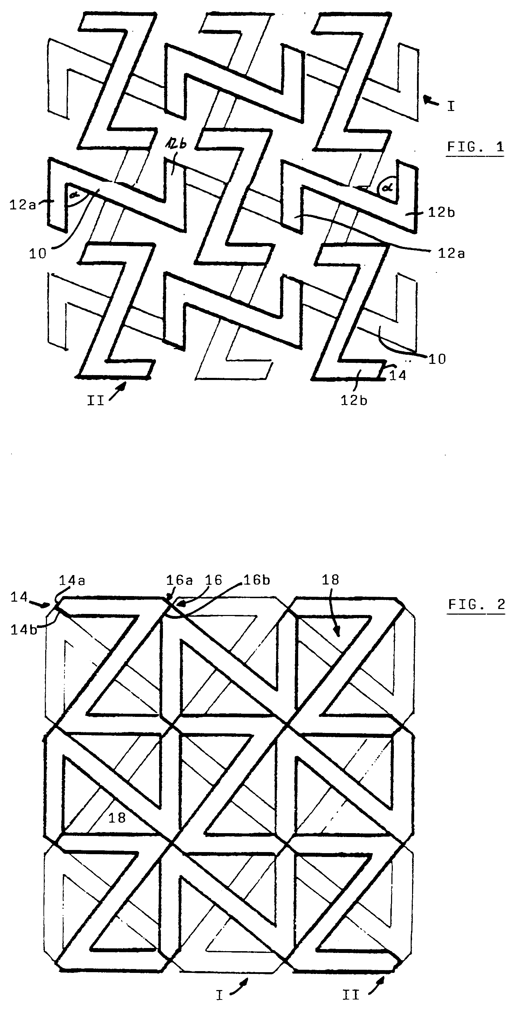

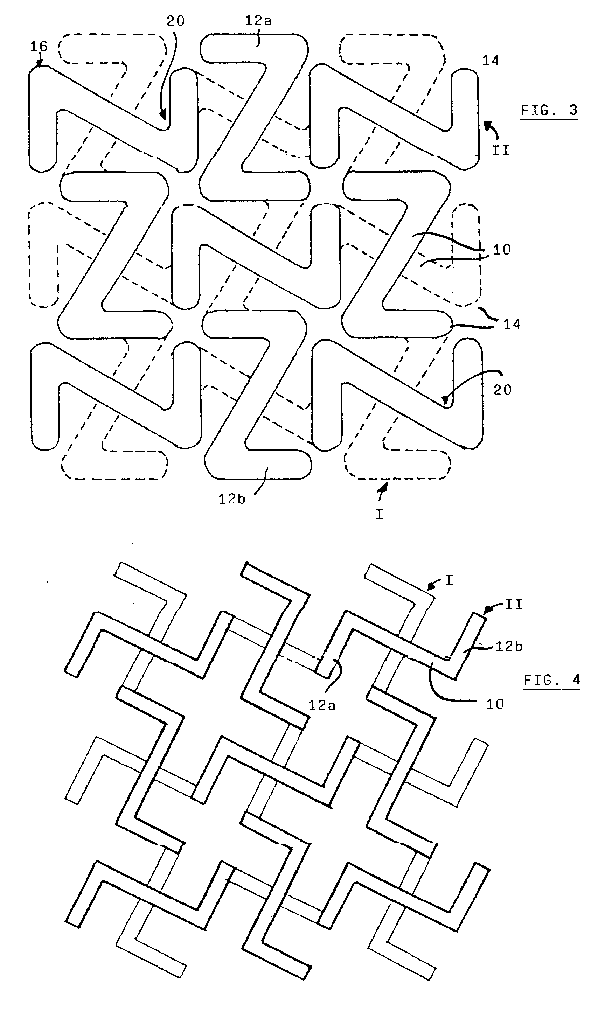

Die in Figur 1 dargestellte Regeneratorgitterung beschreibt eine "offene" Gitterung unter Verwendung eines "Z"-förmigen Steins. Jeder Stein besteht dabei aus einem Basisteil 10 und zwei, endseitig an den Basisteil 10 anschließenden Schenkeln 12a, b. Die Figur zeigt, daß die Schenkel 12a, b parallel zueinander angeordnet sind und schräg verlaufende Stirnkanten 14 aufweisen, die parallel zu den Wandflächen des Basisteils 10 verlaufen.

Der von den Schenkeln 12a beziehungsweise 12b und dem Basisteil 10 ausgebildete Winkel α beträgt hier circa 70°.

In der Figur sind zwei horizontale Ebenen I, II dargestellt, wobei zur besseren Übersichtlichkeit die Steine der Ebene II durch stärkere Umrandungslinien hervorgehoben sind.

Aus der Figur läßt sich entnehmen, daß benachbarte Steine einer Ebene (I beziehungsweise II) jeweils beabstandet zueinander und um 90° versetzt angeordnet sind. Der Abstand zwischen den einzelnen Steinen ist dabei so gewählt, daß der Schenkel 12b eines Steins der Ebene II fluchtend auf dem Schenkel 12a eines darunter in der Ebene I liegenden Steins liegt beziehungsweise der Schenkel 12b eines Steins der Ebene I fluchtend unterhalb des Schenkels 12a des Steins der Ebene II angeordnet ist.

Gleichzeitig kreuzen sich die Basisteile 10 der Steine der Ebenen I beziehungsweise II, wodurch eine weitere Aufstandsfläche gebildet wird.

Daraus folgt, daß jeder Stein an mindestens drei Stellen auf der darunterliegenden Steinebene aufliegt, und zwar mit seinen beiden Schenkeln 12a, b und entlang des Basisteils 10.

Die "offene" Gitterform resultiert hier vor allem daraus, daß der Winkel α relativ groß und die Schenkel 12a , b relativ kurz ausgeführt sind.

Die durch die Gitterung geführte Luft (Gas) durchströmt und umströmt die Steine, wobei es aufgrund der vielfältigen Kontaktflächen der Luft mit den Steinen zu einem hervorragenden Wärmeübergang auf die Steine kommt.

Demgegenüber zeigt die Ausführungsform nach Figur 2 eine "geschlossene" Gitterung. Die einzelnen Steine unterscheiden sich von den Steinen nach Figur 1 dadurch, daß der Winkel Alpha sehr viel kleiner (circa 52°) ist und die Schenkel 12a, b verlängert wurden. Daraus ergibt sich eine Form, bei der die "Eckpunkte" der Schenkel 12a, b sowie die äußeren Eckpunkte 16 der Verbindungsbereiche zwischen den Schenkeln 12a, b und dem Basisteil 10 in der Aufsicht im wesentlichen einem Quadrat entsprechen.

Die Steine nach Figur 2 unterscheiden sich von den Steinen nach Figur 1 weiter dadurch, daß die Stirnkanten 14 der Schenkel 12a, b ebenso wie die äußeren Kanten der Anschlußbereiche zwischen dem Basisteil 10 und den Schenkeln 12a, b "V"-förmig ausgebildet sind. Danach weisen die Kantenbereiche jeweils spiegelbildlich zueinander verlaufende Flächenabschnitte 14a, b beziehungsweise 16a, 16b auf.

Diese Geometrie ermöglicht es, die einzelnen Steine innerhalb einer Ebene unmittelbar aneinanderliegend anzuordnen, wobei benachbarte Steine jeweils um 900 zueinander versetzt sind, so daß sich in der Aufsicht einmal eine "Z"- und einmal eine "N"-Form ergibt.

Wie Figur 2 zeigt, liegen dabei die Flächenabschnitte 14a, b; 16a, b an den entsprechenden Flächenabschnitten des benachbarten Steins an.

Die benachbarte (darunter- oder darüberliegende) Ebene ist analog aufgebaut, wobei jedoch vertikal benachbarte Steine jeweils wieder um 90° zueinander versetzt sind.

Daraus ergibt sich für die Gitterung eine Form, bei der in vertikaler Richtung eine Vielzahl von im wesentlichen quadratischen Luftkanälen 18 gebildet werden, die durch die sich abwechselnd kreuzenden diagonalen Abschnitte der Basisteile 10 in vertikaler Richtung mehrfach "unterbrochen" werden. Die Basisteile 10 sorgen dabei für eine sehr günstige Verwirbelung der Luft beim Durchströmen der Kanäle 18.

Das Ausführungsbeispiel nach Figur 3 ähnelt dem nach Figur 1, wobei die in der Aufsicht "Z"-förmigen Steine hier jedoch abgerundete Stirnkanten 14, 16 aufweisen. Auch der "innere" Anschlußbereich zwischen Basisteil 10 und Schenkel 12a, b ist (bei 20) abgerundet ausgebildet.

Ebenso wie Figur 3 zeigt auch Figur 4 eine "offene" Regeneratorgitterung. Die einzelnen Steine weisen hier jedoch eine "Doppel-L"-Form auf, die auch als "stilisiertes Z" bezeichnet werden kann. Vom Ausführungsbeispiel nach Figur 1 unterscheidet sich die Variante gemäß Figur 4 dadurch, daß die Schenkel 12a, b im rechten Winkel zum Basisteil 10 stehen und flache, parallel zum Basisteil 10 verlaufende Stirnkanten 14 aufweisen. Im übrigen ist die Anordnung der Steine innerhalb einer Ebene jedoch analog der gemäß den Figuren 1 und 3.

Bei allen vorgenannten Ausführungsbeispielen sind die oberen und unteren Standflächen 22 jedes Steins eben ausgebildet.

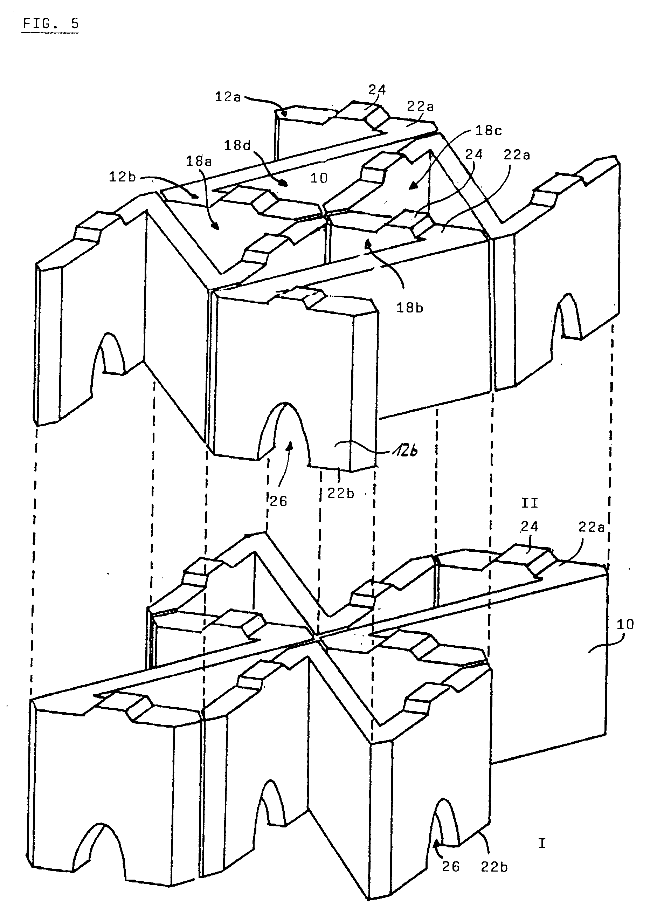

Das Ausführungsbeispiel nach Figur 5 zeigt eine Regeneratorgitterung mit in der Aufsicht "Z"-förmigen Steinen, bei denen die obere Standfläche 22a im Bereich der Schenkel 12a, b federartige Vorsprünge 24 aufweist, während die untere Standfläche 22b im Bereich der Schenkel 12a, b mit nutartigen Rücksprüngen 26 ausgebildet ist. Wie die Figur zeigt, ist die Höhe der Rücksprünge 26 größer als die Höhe der Vorsprünge 24. Nach Konfektionierung der Gitterung greifen dabei also die Vorsprünge 24 der oberen Standfläche 22a einer horizontalen Ebene I in die korrespondierenden Rücksprünge 26 der Steine der darüber angeordneten Ebene II ein. Hierdurch erfolgt eine zusätzliche mechanische Stabilisierung der Gitterung insgesamt. Gleichzeitig verbleiben jedoch horizontal verlaufende Durchbrechungen, durch die die durch die Gitterung geführten Gase quer strömen können, wodurch der wärmetechnische Wirkungsgrad analog den bekannten Topflochsteinen optimiert wird.

Wie Figur 5 weiter zu entnehmen ist, erfolgt die Konfektionierung der Steine innerhalb einer Ebene derart, daß jeweils 4 Steine um 90° versetzt zueinander angeordnet werden, so daß sich anschließend 4 Durchströmungskanäle 18a bis d ergeben. Hierdurch entsteht eine "geschlossene" Gitterung, die aber über die Rücksprünge 26 eine Querströmung zu benachbarten Kanälen ermöglicht.

Der Aufbau der Gitterung nach Figur 5 ist so, daß auch konventionelle Topflochsteine, wie sie aus der EP 0 206 262 A1 bekannt sind, in die Gitterung ohne weiteres integriert werden können.

Die vorstehende Figurenbeschreibung verdeutlicht, daß es mit der erfindungsgemäßen Gestaltung eines Steins zum Aufbau einer Regeneratorgitterung möglich wird, unterschiedlichste Gitterungsformen aufzubauen, die so an den jeweiligen Anwendungszweck optimal angepaßt werden kann. Es können sowohl offene wie geschlossene Gitterungen erstellt werden. Auch Mischformen sind möglich. Darüber hinaus kann eine Gitterung unter Verwendung der erfindungsgemäßen Steine auch mit bekannten Gittersteinen kombiniert werden.

## Patentansprüche

1. Feuerfester Stein zur Erstellung einer Regeneratorgitterung mit einem wandförmigen Basisteil (10) und zwei, sich von gegenüberliegenden Abschnitten des Basisteils (10) in entgegengesetzter Richtung erstreckenden Schenkeln (12a, b), wobei die Schenkel (12a, b) unter einem Winkel > 0 und < 180° zum Basisteil (10) verlaufen.

2. Stein nach Anspruch 1, bei dem der Winkel ≧ 30° und ≦ 90° beträgt.

3. Stein nach Anspruch 1 oder 2, bei dem sich die Schenkel (12a, b) von gegenüberliegenden Seitenkanten (16) des Basisteils (10) erstrecken.

4. Stein nach einem der Ansprüche 1 bis 3, bei dem der Basisteil (10) und die Schenkel (12a , b) eine gleiche Wandstärke aufweisen.

5. Stein nach einem der Ansprüche 1 bis 4, bei dem die Schenkel (12a, b) parallel zueinander verlaufen.

6. Stein nach einem der Ansprüche 1 bis 5, der, bezogen auf eine in der Mitte zwischen den Schenkeln (12a, b) und senkrecht zum Basisteil (10) verlaufenden (gedachten) Ebene spiegelsymmetrisch aufgebaut ist.

7. Stein nach einem der Ansprüche 1 bis 6, bei dem die freien Stirnkanten (14) jedes Schenkels (12a, b) parallel zum Basisteil (10) verlaufen.

8. Stein nach einem der Ansprüche 1 bis 6, bei dem die freien Stirnkanten (14) jedes Schenkels (12a, b) abgerundet ausgebildet sind.

9. Stein nach einem der Ansprüche 1 bis 6, bei dem die freien Stirnkanten (14) jedes Schenkels (12a, b) zur Mittenebene des Schenkels (12a, b) spiegelbildlich gestaltet sind.

10. Stein nach Anspruch 9, bei dem eine Fläche der Stirnkante (14) eine Flanke (14a, b) aufweist, die parallel zum Basisteil (10) verläuft.

11. Stein nach einem der Ansprüche 1 bis 10, bei dem die vom Basisteil (10) und den Schenkeln (12a, b) gemeinsam gebildeten Standflächen (22, 22a, b) mit Profilierungen (24, 26) ausgebildet sind.

12. Stein nach Anspruch 11, bei dem die Standflächen (22, 22a, 22b) mit Vor- und Rücksprüngen (24, 26) ausgebildet sind.

13. Stein nach einem der Ansprüche 1 bis 12, bei dem die Anschlußbereiche (20) zwischen Basisteil (10) und Schenkeln (12a, b) abgerundet ausgebildet sind.

14. Stein nach einem der Ansprüche 1 bis 12, bei dem die Anschlußbereiche (20) zwischen Basisteil (10) und Schenkeln (12a, b) abgekantet ausgebildet sind.

15. Stein nach einem der Ansprüche 1 bis 14, bestehend aus MgO, Chromit, Spinell, Forsterit, Al₂O₃, Mullit, Schamotte, Silica, ZrO₂ und/oder Zirkonsilikat.
